# EUROPEAN PATENT SPECIFICATION

(11) **EP 0 548 036 B1**
(45) Date of publication and mention of the grant of the patent: **28.08.1996**
(21) Application number: 92850294.7
(22) Date of filing: 15.12.1992
(51) Int. Cl.: B23C 5/22, B23C 5/00

(54) **Milling cutter**
Fräser
Fraise

(30) Priority: 17.12.1991 SE 9103724
(43) Date of publication of application: 23.06.1993
(73) Proprietor: SANDVIK AKTIEBOLAG, 811 81 Sandviken (SE)
(72) Inventor: Qvart, Ingemar, S-818 00 Valbo (SE)
(74) Representative: Taquist, Lennart

(56) References cited:
- DE-U- 8 910 441

## Description

The present invention relates to a milling cutter, preferably in the form of a rotary slotting cutter, with clamped cutting inserts whereby each cutting insert is carried by a cartridge received in a recess of the milling cutter body according to the precharacterising portions of claims 1 and 9 respectively. Each cartridge is arranged to be mounted in its recess by means of a wedge clamp which is tightened by means of a clamp screw.

Milling cutters equipped with a number of cutting inserts received in corresponding recesses in the milling cutter are previously known, for instance from DE-B 1102526. The cutting inserts are in that case clamped by means of screws or wedges with serrations. With such clamping it is possible to achieve good stability and regrinding but it is not possible to achieve desired precision when exchanging inserts and, furthermore, the manufacture of such tool becomes very expensive.

DE-U8910441.2 discloses a milling cutter comprising a disc-shaped cutter body with insert-equipped cartridges releasably held by wedges in recesses around the body, said cartridges having serrations on their rear wall extending in the longitudinal direction of said cutter body. With this cutter there is however, no clear acute angular relation between the longitudinal axis of the wedge clamp screw and a radius drawn through the cutter body centre at a reference point where the longitudinal axis of said wedge clamp screw intersects with said radius. As a result thereof the radially inner portion of the cartridge receiving recess in the body cannot be made with desirable small dimension which limits the possibility to reach a maximum stability of the radially inner portion of said milling cutter body.

It is an object of the present invention to provide a milling cutter with cartridges wherein the clamping means for the cartridge is not exposed to unfavorable and varying bending moments.

It is another object of the invention to firmly fix both the axial and the radial position of the cutting insert.

A further object of the invention is to provide a milling cutter with a maximum of stability and adjustability by using a new type of cartridges which enable different assembling variants in an advantageous way for rotary slotting cutters.

A still further object of the invention is to provide a milling cutter with clamping means of such design and with such location that the discharge of chips is not negatively influenced.

The above and other objects of the invention are attained by giving the invention the characterizing features stated in claims 1 and 9 respectively following hereinafter.

The invention is described in detail in the following description with reference to the accompanying drawings. It is to be understood that the illustrated embodiments are only shown by way of example and that various modifications may be made within the scope of the claims.
Fig 1 is a side view of a slotting milling cutter according to one embodiment of the invention in which an insert equipped cartridge is mounted in the milling cutter body while one of said cartridges is taken away,
Fig 2 is a partial side view of a slotting cutter according to another embodiment of the invention, and
Fig 3 is a partial side view of a slotting cutter according to another embodiment of the invention.

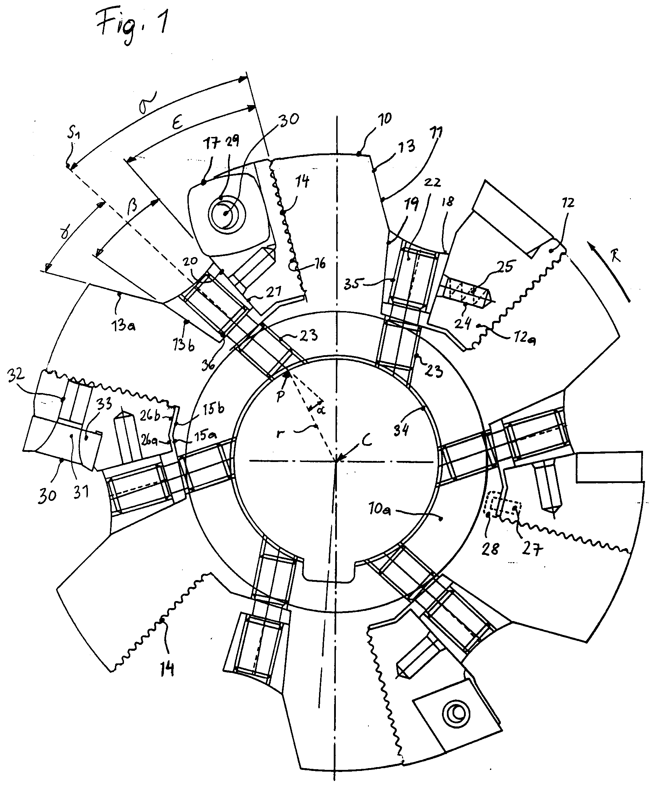

In the Figures 1-2, the rotary slotting milling cutter body is denoted by 10. The cutter has a central core portion 10a and a plurality of peripheral recesses 11 located in positions radially inside but in close proximity of said core portion 10a for the receipt of insert-equipped and partially wedge-shaped cartridges 12. The width of said cartridge 12 could be identical with the entire width or a portion of the width of the milling cutter.

The radially inner wedge-shaped portion of said cartridge is denoted by 12a. The milling cutter body is arranged for rotation around the central axis in direction R. The recesses 11 are evenly distributed along the periphery of the cutter body 10, in this case six of them are provided. It is to be understood, however, that said recesses 11 in certain cases might be unevenly distributed around the periphery of the milling cutter body.

The forwardly located wall of each recess 11, as seen in the rotary direction R, consists of two surfaces 13a and 13b arranged at an angle from each other whereas the rear wall 14 has a straight contour. The bottom of said recess is confined by a bottom wall consisting of two surfaces 15a and 15b arranged at an angle from each other which extend between the walls 13 and 14. The rear wall 14 of said recess 11 is provided with axially straight serrations intended to engage with corresponding serrations 16 provided in the rear wall of said cartridge 12. These serrations 16 extend along the entire width or part of the cutter body 10 and enable pushing said cartridge 12 in the axial direction from either the front side or the back side of said cutter body. It is an important feature that the forward bottom portion 15a of said recess 11 is arranged at an angle of 90-100° with regard to the wall 13b whereas the rear 15b of said bottom is oriented at an angle of 90° from the rear wall 14 in same recess.

The clamping means for the cartridge 12 is in the form of a clamping wedge 18 arranged radially inside the insert 17 on the cartridge 12. The forward wedge surface 19, as seen in rotary direction, is arranged in abutment with wall portion 13b of recess 11, whereas the rear wedge surface 20 is arranged in abutment with the opposite surface 21 of the cartridge 12. The clamping wedge 18 is displaced along said surfaces 13b and 21 upon tightening a clamp screw 22 that is threadably engaged in a corresponding threaded bore 23 in said recess in the cutter body 10, whereby said bore 23 extends all the way through the core portion 10a of said cutter. The clamp screw 22 is provided with right hand and left hand threads so that the clamp wedge 18 is urged displaceable in both the clamping and the opening directions. There is-provided and axial bore 24 in the cartridge 12 which extends into the surface 21 in which a helical spring 25 is to be received. This helical spring 25 is intended to push the cartridge 12 rearwards so that the serrations 16 of the cartridge come into engagement with corresponding serrations of the surface 14. Loosening of said cartridge 12 is accomplished by un-tightening the clamp screw 22.

In order to provide stable and good radial support for the cartridge 12 the underneath side thereof of the inner cartridge portion 12a is provided as an angular broken surface composed by surfaces 26a and 26b which correspond with angular broken surfaces 15a and 15b in the recess 11. In order to achieve proper mounting of the cartridge 12 in its recess said cartridge is provided with a radially oriented cylindrical steering pin 27 which is received in a bore 28 in the cutter body whereby said bore having a larger diameter than said steering pin. This steering pin 27 should be oriented parallel with the extension of the surface 14.

The radially outer portion of said cartridge 12 should, in a manner known per se, be provided with a seat for the location of the cutting insert 17. The insert 17 is in this case provided with a central aperture 29 for the receipt of the conical head 31 of a centrally provided clamp screw 30 which is threadably engaged in a correspondingly threaded bore 32 in said cartridge 12. The central aperture 29 of the insert has a decreasing cross section towards the bottom surface 33.

The cartridges 12 could, at different positions around the milling cutter body, be provided with inserts 17 located in different ways such as shown in Fig 1. The common features for all these cartridges is that the inserts have central apertures for the receipt of a clamping screw 30 engaging therein. The wedge-formed portion 12a of the cartridge shall be provided with a wedge angle ε that amounts to 10-35°, preferably 20-30°.

An important feature is that the centre line S₁ of the clamp screw 22 for the wedge 18 is not radially oriented in relation to the centre C of the milling cutter. More specifically, the wedge surface 20 forms an acute angle with line S₁ and said line S₁ forms an acute angle α with a radius r whereby said radius r intersects with line S₁ at a point where said line S₁ extends to a point P at the inner periphery of the central hole 34 of the milling cutter. This angle α should amount to 10-25°.

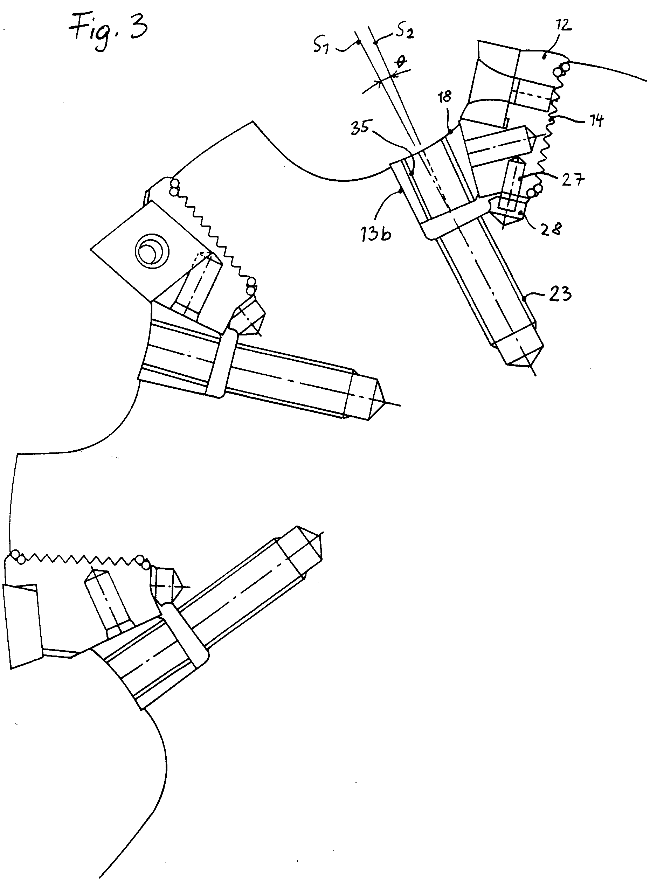

The centre line S₁ should preferably be oriented substantially perpendicularly from the surface 15a and also such that it coincides with the bisector of the angle β between surface 21 and 13b. In order to achieve as efficient locking effect as possible when tightening the wedge 18 the centre line of the threaded bore 35 in the wedge 18 should deviate at a certain angle from the centre line S₁ of the clamp screw 22. This angular deviation could be positive or negative in relation to the centre line S₁ . The angular range should be 1-5°. Another important feature is that said centre line S₁ forms a larger angle γ with the surface 13 than compared with the angle between line S₁ and the radially innermost wall 13b. With the alternative embodiment shown in Fig 3 the centre line S₁ for the threaded bore 23 is parallel to surface 13b. The centre line S₂ of the bore 35 of the wedge 18 is provided at a positive angle θ.

At the same time centre line S₁ for the clamp screw 22 forms a rather large angle σ with the rear support wall 14 of recess 11 which is in surface abutment with the cartridge 12. This angle σ should amount to 25-45°, preferably 30-40°. The angle β/2 between the line S₁ and wall surface 13b ought to be 0-12°.

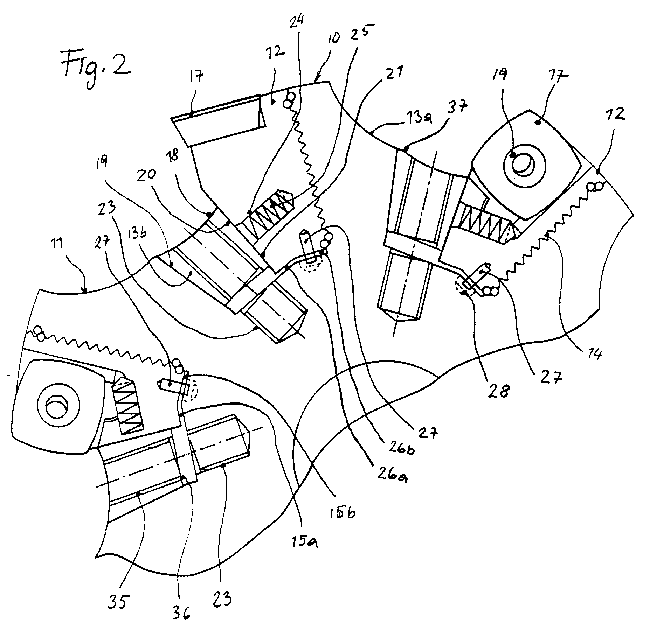

With the embodiment shown in Fig 2 a rotary slotting cutter is provided equipped with insert provided cartidges clamped into recesses 11 around the circumference of the milling cutter body 10 principally as shown in Fig 1. In this case the milling cutter body does not have a central core portion with bores for the wedge clamp screws of same type as in Fig 1. The bores 23 for receiving the screws 22 do not extend all the way to the central hole 34 of the cutter body 10 since they are terminated at a certain distance therefrom. In order to provide for improved, more favorable discharge of chips the outer wall 13a of the recess 11 has been given a concave contour. At the same time also the upper surface 37 of the wedge 18 could have a similar concave form. Normally the concave surface of said upper surface 37 is provided with a larger radius of curvature than compared with the radius of curvature for said outer wall 13a.

In order to achieve a stable and safe abutment of the cartridge 12 in its recess the underneath surface of said cartridge has an angularly broken form composed of surfaces 26a and 26b, said surfaces having an angularly broken contour corresponding with the contour of surfaces 15a and 15b. This arrangement will, combined with the arrangement of steering pin 27 and helical spring 25, provide for a stable mounting of the cartridge and a stable engagement between the serrations 16 of the cartridge and the serrations of the rear wall 14 of the recess 11.

## Claims

1. Milling cutter, comprising a disc-shaped cutter body (10) with a number of spaced recesses (11) around its periphery, each said recess being confined by a forward wall (13a, 13b), a rear wall (14) and a bottom wall (15a, 15b) therebetween in which cartridges (12) with inserts (17) are releasably secured by clamping means (31), each said cartridge (12) being wedgingly clamped in said recess by means of a clamp wedge (18) which by means of a clamp screw (22) is engaged between the forward wall of the recess and an opposite support surface (21) on the cartridge at a position located radially inside the cutting insert (17), whereby the rear wall (14) of said recess is provided with serrations extending in the longitudinal direction of said body (10) so as to be engaged with corresponding serrations (16) on an adjacent support surface of said cartridge (12), **characterized** in that the radially inner portion (12a) of the cartridge is wedgeshaped, whereby said support surface (21) of the cartridge is provided on said wedgeshaped portion (12a), whereby the longitudinal axis of each clamp screw (22) is intersecting a wall of a central bore (34) of said cutter body (10) at a reference point (P) and forming an angle (α) of about 10-25 degrees with a radius of said cutter body intersecting said reference point (P).

2. Milling cutter as defined in claim 1,
**characterized** in that the centre line (S₁) of clamp screw (22) is oriented essentially perpendicularly in relation to the forward surface (15a) of the bottom wall of said recess (11).

3. Milling cutter as defined in claim 1,
**characterized** in that that the bottom wall of recess (11) has an angularly broken contour including a foward wall surface (15a) and a rear wall surface (15b), said latter wall being formed essentially perpendicularly in relatin to the rear wall surface (14) of said recess (11)

4. Milling cutter as defined in any of claims 1-3,
**characterized** in that each cartridge (12) is provided with a radially oriented cylindrical steering pin (27) which is arranged to be received in a recess (28) with larger diameter in the cutter body (10) so as to enable axial displacement of said cartridge.

5. Milling cutter as defined in claim 4,
**characterized** in that the steering pin (27) is oriented parallel with the rear wall (14) of the recess (11).

6. Milling cutter as defined in any of claims 1-5,
**characterized** in that the centre line (S₁) of the clamp screw (22) is oriented in alignment with the bisector of angle (β) between a wall surface (13b) and the cartridge surface (21).

7. Milling cutter as defined in claim 6,
**characterized** in that the centre line for the threaded bore (35) in the wedge (18) deviates at an angle 1-5° from the centre line (S₁) for the clamp screw (22) and threaded bore (23).

8. Milling cutter as defined in any of the claims 1-7,
**characterized** in that the centre line (S₁) forms an angle (σ) with the rear wall (14) of the recess (11), said angle (σ) being in the range of 25-45°, preferably 30-40°.

9. Milling cutter, comprising a disc-shaped cutter body (10) with a number of spaced recesses (11) around its periphery, each said recess being confined by a forward wall (13a, 13b), a rear wall (14) and a bottom wall (15a, 15b) therebetween in which cartridges (12) with inserts (17) are releasably secured by clamping means (31) each said cartridge (12) being wedgingly clamped in said recess by means of a clamp wedge (18) which by means of a clamp screw (22) is engaged between the forward wall of the recess and an opposite support surface (21) on the cartridge at a position located radially inside the cutting insert (17), whereby the rear wall (14) of said recess is provided with serrations extending in the longitudinal direction of said body (10) so as to be engaged with corresponding serrations (16) on an adjacent support surface of said cartridge (12), **characterized** in that the radially inner portion (12a) of the cartridge (12) is wedge-shaped with a wedge angle (ε) that amounts to 10-35°, preferably 20-30°, whereby said support surface (21) of the cartridge is provided on said wedge-shaped portion (12a).

## Patentansprüche

1. Fräser mit einem scheibenförmigen Fräserkörper (10) mit einer Anzahl von im Abstand angeordneten Ausnehmungen (11) um seinen Umfang, wobei jede Ausnehmung durch eine Vorderwand (13a, 13b), eine Rückwand (14) und eine Bodenwand (15a, 15b) dazwischen begrenzt ist, in welchen Kassetten (12) mit Einsätzen (17) durch Klemmittel (31) lösbar befestigt sind, wobei jede Kassette (12) in der Ausnehmung mittels eines Festklemmkeiles (18) keilartig festgeklemmt ist, der mittels einer Klemmschraube (22) zwischen der Vorderwand der Ausnehmung und einer gegenüberliegenden Stützoberfläche (21) auf der Kassette an einer Position in Eingriff ist, die radial innerhalb des Schneideinsatzes (17) angeordnet ist, wobei die Rückwand (14) der Ausnehmung mit Kerbverzahnungen versehen ist, die sich in Längsrichtung des Körpers (10) so erstrecken, daß sie mit entsprechenden Kerbverzahnungen (16) auf einer benachbarten Stützoberfläche der Kassette (12) in Eingriff kommen, **dadurch gekennzeichnet, daß** der radial innere Teil (12a) der Kassette keilförmig ist, wobei die Stützoberfläche (21) der Kassette auf dem keilförmigen Teil (12a) vorgesehen ist, wobei die Längsachse jeder Klemmschraube (22) eine Wand einer Zentralbohrung (34) des Fräserkörpers (10) an einem Bezugspunkt (P) schneidet und einen Winkel (α) von etwa 10-25° mit einem Radius des Schneidkörpers bildet, welcher den Bezugspunkt (P) schneidet.

2. Fräser nach Anspruch 1, dadurch gekennzeichnet, daß die Mittellinie (S₁) der Klemmschraube (22) im wesentlichen senkrecht bezüglich der Vorderfläche (15a) der Bodenwand der Ausnehmung (11) ausgerichtet ist.

3. Fräser nach Anspruch 1, dadurch gekennzeichnet, daß die Bodenwand der Ausnehmung (11) eine winkelig gebrochene Kontur hat mit einer vorderen Wandoberfläche (15a) und einer hinteren Wandoberfläche (15b), wobei die letztere Wand im wesentlichen senkrecht bezüglich der Rückwandoberfläche (14) der Ausnehmung (11) gebildet ist.

4. Fräser nach einem der Ansprüche 1 bis 3, dadurch gekennzeichnet, daß jede Kassette (12) mit einem radial ausgerichteten, zylindrischen Führungsstift (27) versehen ist, der angeordnet ist, um in einer Ausnehmung (28) mit größerem Durchmesser im Fräserkörper (10) aufgenommen zu werden, um ein axiales Verstellen der Kassette zu ermöglichen.

5. Fräser nach Anspruch 4, dadurch gekennzeichnet, daß der Führungsstift (27) parallel zur Rückwand (14) der Ausnehmung (11) ausgerichtet ist.

6. Fräser nach einem der Ansprüche 1 bis 5, dadurch gekennzeichnet, daß die Mittellinie (S₁) der Klemmschraube (22) in Flucht mit der Winkelhalbierenden des Winkels (β) zwischen einer Wandoberfläche (13b) und der Kassettenoberfläche (21) ausgerichtet ist.

7. Fräser nach Anspruch 6, dadurch gekennzeichnet, daß die Mittellinie für die Gewindebohrung (35) in dem Keil (18) unter einem Winkel 1-5° von der Mittellinie (S₁) für die Klemmschrauben (22) und die Gewindebohrung (23) abweicht.

8. Fräser nach einem der Ansprüche 1 bis 7, dadurch gekennzeichnet, daß die Mittellinie (S1) einen Winkel (σ) mit der Rückwand (14) der Ausnehmung (11) bildet, wobei der Winkel (σ) im Bereich von 25-45°, vorzugsweise 30-40°, liegt.

9. Fräser mit einem scheibenförmigen Fräserkörper (10) mit einer Anzahl von im Abstand befindlichen Ausnehmungen (11) um seinen Umfang, wobei jede Ausnehmung durch eine Vorderwand (13a, 13b), eine Rückwand (14) und eine Bodenwand (15a, 15b) dazwischen begrenzt ist, in welcher Kassetten (12) mit Einsätzen (17) durch Klemmittel (31) lösbar befestigt sind, wobei jede Kassette (12) keilartig in der Ausnehmung mittels eines Festklemmkeiles (18) festgeklemmt ist, der mittels einer Klemmschraube (22) zwischen der Vorderwand der Ausnehmung und einer gegenüberliegenden Stützoberfläche (21) auf der Kassette an einer Stelle in Eingriff steht, die radial innerhalb des Schneideinsatzes (17) angeordnet ist, wobei die Rückwand (14) der Ausnehmung mit Kerbverzahnungen versehen ist, die sich in der Längsrichtung des Körpers (10) erstrecken, um mit entsprechenden Kerbverzahnungen (16) auf einer benachbarten Stützoberfläche der Kassette (12) in Eingriff zu kommen, **dadurch gekennzeichnet, daß** der radial innere Teil (12a) der Kassette (12) keilförmig ist mit einem Keilwinkel (ε), der sich auf 10-35°, vorzugsweise 20-30°, beläuft, wobei die Stützoberfläche (21) der Kassette auf dem keilförmigen Teil (12a) vorgesehen ist.

## Revendications

1. Fraise, comprenant un corps de fraise en forme de jupe (10) ayant un certain nombre d'évidements espacés (11) sur sa périphérie, chaque dit évidement étant confiné par une paroi avant (13a, 13b), une paroi arrière (14) et une paroi inférieure (15a, 15b) entre elles, et dans lequel des cartouches (12) munies d'inserts (17) sont fixées de façon détachable grâce à des moyens de fixation (31), chaque dite cartouche (12) étant fixée par cales dans ledit évidement au moyen d'une cale de fixation (18) qui, au moyen d'une vis de serrage (22), est engagée entre la paroi avant de l'évidement et une surface de support opposée (21) sur la cartouche en un emplacement situé radialement à l'intérieur de l'insert de coupe (17), si bien que la paroi arrière (14) dudit évidement est pourvue de crantages s'étendant dans la direction longitudinale dudit corps (10) de manière à être engagés avec les crantages correspondants (16) sur une surface de support adjacente de ladite cartouche (12), caractérisée en ce que la partie radialement intérieure (12a) de la cartouche est en forme de cale, si bien que ladite surface de support (21) de la cartouche est prévue sur ladite partie en forme de cale (12a), si bien que l'axe longitudinal de chaque vis de serrage (22) croise une paroi de l'alésage central (34) dudit corps de fraise (10) en un point de référence (P) et formant un angle (α) d'environ 10-25 degrés avec un rayon dudit corps de fraise qui croise ledit point de référence (P).

2. Fraise selon la revendication 1, caractérisée en ce que la ligne centrale (S₁) de la vis de serrage (22) est essentiellement orientée perpendiculairement à la surface avant (15a) de la paroi inférieure dudit évidement (11).

3. Fraise selon la revendication 1, caractérisée en ce que la paroi inférieure de l'évidement (11) présente un contour angulairement brisé comprenant une surface de paroi avant (15a) et une surface de paroi arrière (15b), ladite dernière paroi étant formée en étant essentiellement perpendiculaire à la surface de paroi arrière (14) dudit évidement (11).

4. Fraise selon l'une quelconque des revendications 1 à 3, caractérisée en ce que chaque cartouche (12) est pourvue d'un pivot de guidage cylindrique orienté radialement (27) qui est disposé pour être reçu dans un évidement (28) d'un diamètre plus grand dans le corps de fraise (10) de manière à permettre le déplacement axial de ladite cartouche.

5. Fraise selon la revendication 4, caractérisée en ce que le pivot de guidage (27) est orienté parallèlement à la paroi arrière (14) de l'évidement (11).

6. Fraise selon l'une quelconque des revendications 1 à 5, caractérisée en ce que la ligne centrale (S₁) de la vis de serrage (22) est orientée en alignement avec la bissectrice de l'angle (β) entre une surface de paroi (13b) et la surface de cartouche (21).

7. Fraise selon la revendication 6, caractérisée en ce que la ligne centrale de l'alésage taraudé (35) dans la cale (18) dévie d'un angle de 1-5° par rapport à la ligne centrale (S₁) de la vis de serrage (22) et l'alésage taraudé (23).

8. Fraise selon l'une quelconque des revendications 1 à 7, caractérisée en ce que la ligne centrale (S₁) forme un angle (σ) avec la paroi arrière (14) de l'évidement (11), ledit angle (σ) étant compris dans la plage angulaire de 25-45°, préférablement de 30-40°.

9. Fraise, comprenant un corps de fraise en forme de jupe (10) ayant un certain nombre d'évidements espacés (11) sur sa périphérie, chaque dit évidement étant confiné par une paroi avant (13a, 13b), une paroi arrière (14) et une paroi inférieure (15a, 15b) entre elles, et dans lequel des cartouches (12) munies d'inserts (17) sont fixées de façon détachable grâce à des moyens de fixation (31), chaque dite cartouche (12) étant fixée par cales dans ledit évidement au moyen d'une cale de fixation (18) qui, au moyen d'une vis de serrage (22), est engagée entre la paroi avant de l'évidement et une surface de support opposée (21) sur la cartouche en un emplacement situé radialement à l'intérieur de l'insert de coupe (17), moyen grâce auquel la paroi arrière (14) dudit évidement est pourvue de crantages s'étendant dans la direction longitudinale dudit corps (10) de manière à être engagés avec les crantages correspondants (16) sur une surface de support adjacente de ladite cartouche (12), caractérisée en ce que la partie radialement intérieure (12a) de la cartouche (12) est en forme de cale avec un angle de cale (ε) de 10-35°, préférablement de 20-30°, si bien que ladite surface de support (21) de la cartouche est prévue sur ladite partie en forme de cale (12a).
